# EUROPEAN PATENT APPLICATION

(11) **EP 2 058 601 A1**
(43) Date of publication of application: **13.05.2009**
(21) Application number: 07806157.9
(22) Date of filing: 28.08.2007
(51) Int. Cl.: F24F 13/28, B01D 46/10

(54) **AIR CONDITIONER**

(30) Priority: 31.08.2006 JP 2006235990
(71) Applicant: Daikin Industries, Ltd., Osaka-shi, Osaka 530-8323 (JP)
(72) Inventor: AKAI, Tatsuhikoc/o Shiga Plant, Kusatsu-shi, Shiga 5258526 (JP)
(74) Representative: HOFFMANN EITLE
(86) International application number: PCT/JP2007/066680
(87) International publication number: WO 2008/026598

(57) **Abstract**

An air conditioner equipped with an automatic filter cleaning function is provided which can be constructed in a small size while using a plurality of band-like filters. The air conditioner includes a plurality of juxtaposed frame units (22) on each of which a band-like filter (21) and transfer means (30) for transferring the filter (21) are mounted. Two motors (26, 27) for driving the transfer means (30) of each frame unit (22) are attached to a right frame unit (22a), and the power of the upper motor (27) is transmitted to another frame unit (22b) internally through the right frame units (22a). Accordingly, a plurality of motors can be arranged in the same space. Each motor (26, 27) is disposed adjacently to an electrical component box (14).

## Description

### TECHNICAL FIELD

The present invention relates to an air conditioner, and more specifically to an air conditioner equipped with an automatic filter cleaning function.

### BACKGROUND ART

An air conditioner is configured such that indoor air that is sucked by a blower fan is cooled or heated by being passed through a heat exchanger and then is returned to the room, and is provided with a filter on the front side of the heat exchanger in order to prevent dust floating in the air from contaminating the heat exchanger. When dust adheres to the filter and clogging of the filter occurs, it will increase resistance to ventilation. When that happens, the air conditioning performance of the air conditioner will drop and power consumption will increase. In order to eliminate such a problem, various types of air conditioners equipped with an automatic filter cleaning function have been proposed.

When automatically cleaning a filter, the entire surface of the filter is cleaned with a cleaning brush, so that it is necessary to move at least either one of the filter or the cleaning brush. There are roughly two types of method to move an air filter: a roll-up method and a loop method.

As disclosed in Patent Document 1, the roll-up method is a method in which a band-like filter wound around one roller is moved by being rolled up by another roller, and cleaning is performed with a cleaning brush in the course of such process.

In addition, as disclosed in Patent Document 2, the loop method is a method in which a band-like filter formed in an annular shape is supported by a pair of rollers and is moved by rotating the rollers, and cleaning is performed with a cleaning brush in the course of such process.
<Patent Document 1> JP-ANo. 2001-99479
<Patent Document 2> JP-U No. 62-145019

### DISCLOSURE OF THE INVENTION

### <TECHNICAL PROBLEM>

In both conventional methods exemplary described above, a single sheet of filter whose width is wide enough to cover the entire width of an indoor unit is used as a filter. As it is well known, a filter used for an air conditioner has a structure in which a net is stretched over a synthetic resin frame body extending vertically and horizontally, and the net and the frame body are integrally formed. Accordingly, the cost increase as the size increases. In order to eliminate such a problem, it is conceivable to use a plurality of narrow band-like filters by juxtaposing them. In this case, each filter needs to be moved for cleaning work. However, if the same transfer means is used to move all the filters, it will be difficult to ensure the movement. Thus, it is preferable to provide transfer means for each filter. However, at the same time, when the band-like filters are used in such a way, ingenuity is required for arrangement of transfer means and a drive source in order to prevent an increase of the size of the air conditioner.

The present invention is made to solve the above described conventional problem. An object of the present invention is to provide an air conditioner equipped with an automatic filter cleaning function in which the air conditioner can be constructed in a small size while using a plurality of band-like filters.

### <SOLUTION TO PROBLEM>

An air conditioner according to a first aspect of the present invention is an air conditioner in which sucked indoor air is passed through a filter, conditioned, and then returned to a room, the air conditioner including: a plurality of juxtaposed frame units on each of which a band-like filter and transfer means for transferring the filter are mounted; driving means attached to any particular frame unit for driving the transfer means of each frame unit; and transmission means provided for transmitting the power of the driving means to another frame unit internally through the frame unit.

An air conditioner according to a second aspect of the present invention is the air conditioner according to the first aspect of the present invention, wherein the driving means is attached to a lateral portion of the frame unit arranged closest to an electrical component box, the lateral portion being closest to the electrical component box.

An air conditioner according to a third aspect of the present invention is the air conditioner according to the first or second aspect of the present invention, wherein a filter unit is constructed by connecting the plurality of frame units, and this filter unit is attached to a bottom frame of a main body of the air conditioner.

### <EFFECTS OF THE INVENTION>

With the air conditioner according to the first aspect of the present invention, the driving means is attached to a particular frame unit, and the transmission means is provided which transmits the power of the driving means to another frame unit internally through the frame unit. Thus, it is possible to arrange a plurality of driving means in the same space, and consequently the air conditioner can be constructed in a small size. In addition, the transfer means is provided to each filter, so that reliable cleaning operation can be performed.

With the air conditioner according to the second aspect of the present invention, the driving means is disposed at a position closest to the electrical component box, so that the wire harness work can be simplified. In addition, if an integrated connector is used in this case, workability of assembly, maintenance, and the like will be improved.

With the air conditioner according to the third aspect of the present invention, because the structure having the juxtaposed frame units can be handled as the integrated filter unit, workability of assembly, maintenance, and the like is improved.

### BRIEF DESCRIPTION OF THE DRAWINGS

Figure 1 is an exploded perspective view showing the entire configuration of an air conditioner according to an embodiment of the present invention.
Figure. 2 is a longitudinal cross sectional view of the air conditioner in Figure 1.
Figure 3 is a perspective view of a frame unit of the air conditioner in Figure 1.
Figure 4 is a perspective view showing a state in which a filter is attached to an annular belt of the air conditioner in Figure 1.
Figure 5 is a perspective view of the filter of the air conditioner in Figure 1.
Figure 6 is a longitudinal cross sectional view showing a roll-up mechanism of the air conditioner in Figure 1.
Figure 7 is a longitudinal cross sectional view showing the roll-up mechanism of the air conditioner in Figure 1 in a state in which winding is finished.
Figure 8 is a schematic view for describing a power transmission mechanism of driving means of the air conditioner in Figure 1.
Figure 9 is a schematic view of a transmission path of the power transmission mechanism in the frame unit on the right side.
Figure 10 is a schematic view of a transmission path of the power transmission mechanism in the frame unit on the left side.

### EXPLANATION OF THE REFERENCE SYMBOLS

- 21: Filter
- 26, 27: Motor (driving means)
- 30: Roll-up mechanism
- 31,32: Pulley
- 33: Annular belt
- 34: Fitting hole
- 35: Projection
- 42: Guide member
- 44: Elastic member

### BEST MODE FOR CARRYING OUT THE INVENTION

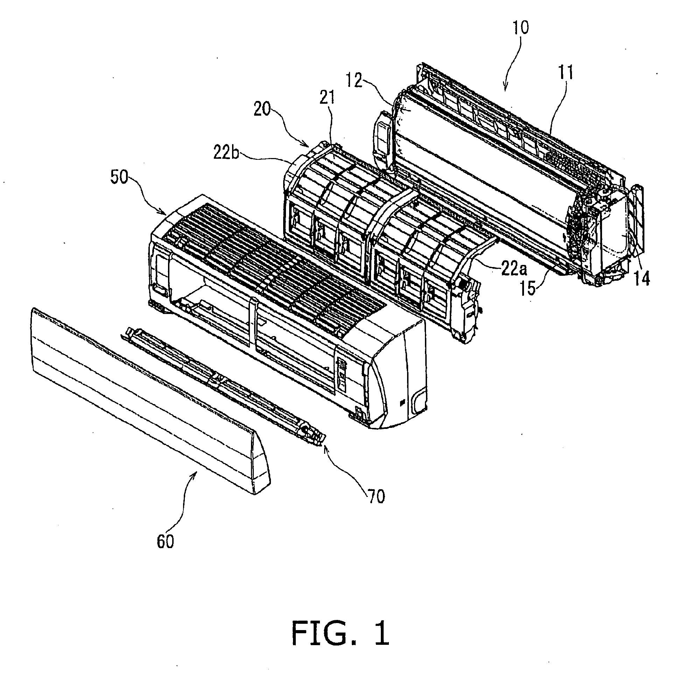

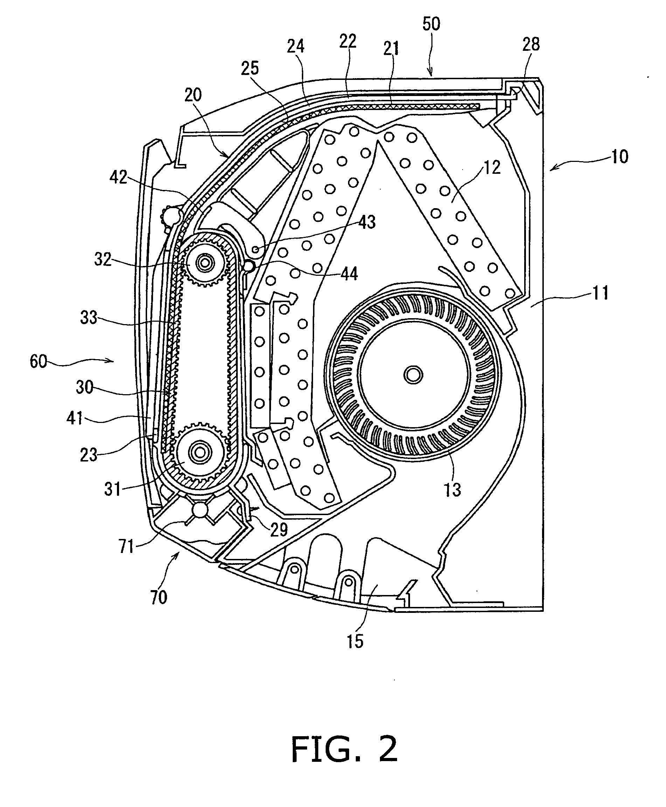

Next, a specific embodiment of an air conditioner of the present invention is described in detail with reference to the drawing. Figure 1 is an exploded perspective view of the entire air conditioner, and Figure 2 is a longitudinal cross sectional view thereof. The air conditioner has a main body unit 10, a filter unit 20, a front grille 50, a front panel 60, and a dust box 70.

As shown in Figure 2, the main body unit 10 has a bottom frame 11, and the bottom frame 11 has an indoor heat exchanger 12, a blowing fan (cross flow fan) 13, an electrical component box 14 (see Figure 1), and the like mounted thereon. The main body unit 10 is configured to suck indoor air and perform air conditioning operation such as cooling, heating, humidity conditioning, and the like.

The filter unit 20 includes a filter 21. Contamination of the indoor heat exchanger 12 by dust floating in the air is prevented by disposing the filter 21 on the front side (windward side) of the indoor heat exchanger 12. In addition, the filter unit 20 has a roll-up mechanism 30 as transfer means that moves the filter 21 downward for cleaning to remove dust adhering to the filter 21. The roll-up mechanism 30 is described later.

The dust box 70 has a function to clean the filter 21. Further, the filter unit 20 is attached to the bottom frame 11 of the main body unit 10, and the front grille 50 is attached to the filter unit 20 so as to cover the filter unit 20. The front panel 60 is attached to the front grille 50 so as to cover the front side of the front grille 50 in a freely openable/closable manner. In addition, the dust box 70 is attached below the front grille 50. Specifically, the dust box 70 is attached to a position that is above a discharge port 15 of the main body unit 10 and below the front panel 60. The dust box 70 is attached in such a manner that the dust box 70 is externally attachable/removable without interfering with the front panel 60 in a state in which the front panel 60 is closed.

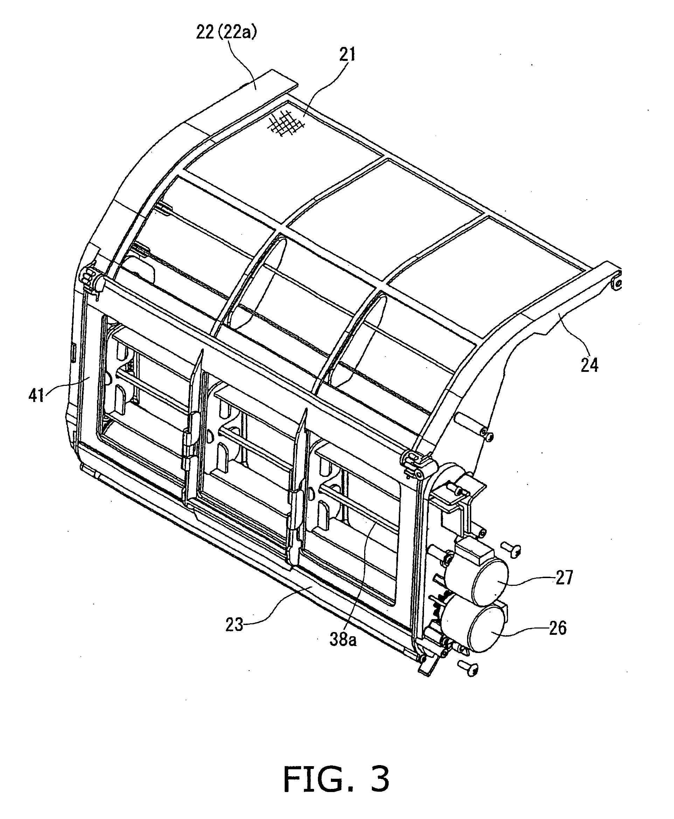

As shown in Figure 1, the filter unit 20 has a left-right pair of frame units 22a and 22b. Each filter 21 is movably supported by each frame unit 22 (hereinafter when no particular distinction is made between the left and right frame units 22a and 22b, these frame units are denoted by the symbol 22). Figure 3 shows details of the frame unit 22a on the right side when seen from the front, i.e., the frame unit 22a located at a position closest to the electrical component box 14.

The frame unit 22 has a main body part 23 located at a lower portion and a guide frame 24 extending from the main body part 23 obliquely upward. The roll-up mechanism 30 (described later) of the filter 21 is mounted to the main body part 23. In addition, the guide frame 24 has a groove-like guide portion 25 (see Figure 2) formed on the inner side of the guide frame 24. The groove-like guide portion 25 has a function to hold the filter 21 at a predetermined position during normal use and to guide the both lateral portions of the filter 21 during the movement of the filter 21.

The main body part 23 has a vertically arranged pair of motors 26 and 27 attached to the right side thereof, i.e., at a right lateral portion located at a position closest to the electrical component box 14. Each of these motors 26 and 27 serves as driving means for the roll-up mechanism (transfer means) 30. The lower motor 26 drives the filter 21 of the right frame unit 22a shown in the figure. The upper motor 27 is for driving the filter 21 of the left frame unit 22b shown in Figure 1. Although not shown, the harness to each of the motors 26 and 27 is led out from the electrical component box 14 and connected via a central connector. A power transmission path for driving the left filter 21 from the upper motor 27 is described later.

Note that, as shown in Figure 3, in each frame unit 22, the front side of the main body part 23 is formed as a door portion 41 that pivots with its upper portion as a fulcrum such that its lower portion can swing back and forth.

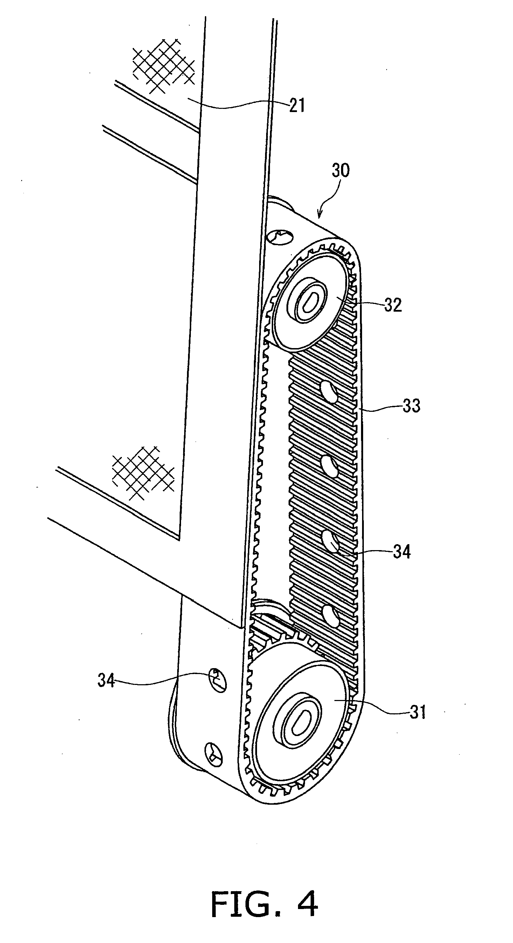

As shown in Figure 2, the roll-up mechanism 30 for moving the filter 21 is attached to the main body part 23 of the frame unit 22. As shown in Figures 2 and 4, the roll-up mechanism 30 has a vertically arranged pair of pulleys 31 and 32 for a teethed belt, and an annular belt 33 having teeth wound between the both pulleys 31 and 32.

The rotation shafts of the both pulleys 31 and 32 are arranged in the horizontal direction, i.e., perpendicular to the moving direction of the filter 21. At the same time, the both pulleys 31 and 32 are arranged parallel to each other with a predetermined space therebetween so as to extend in a direction along the flat surface of the filter 21. As a result, the roll-up mechanism 30 forms a roll-up unit whose dimension in the moving direction of the filter 21 is greater than the dimension in the thickness direction of the filter 21. In the figure, the moving direction of the filter 21 is the up-down direction (moving direction of the filter 21 at the front side). In terms of air flow, it is the direction perpendicular to the direction of the air distribution. Further, it is the direction along the moving path of the filter 21.

In addition, in the figure, the thickness direction of the filter 21 is the left-right direction, which is the air distribution direction. Two such roll-up mechanisms 30 are provided, one for each frame unit 22, as the left-right pair. As shown in Figure 4, the annular belt 33 has fitting holes 34 formed therein as attachment portions at predetermined intervals (equal pitch) across the annular belt 33.

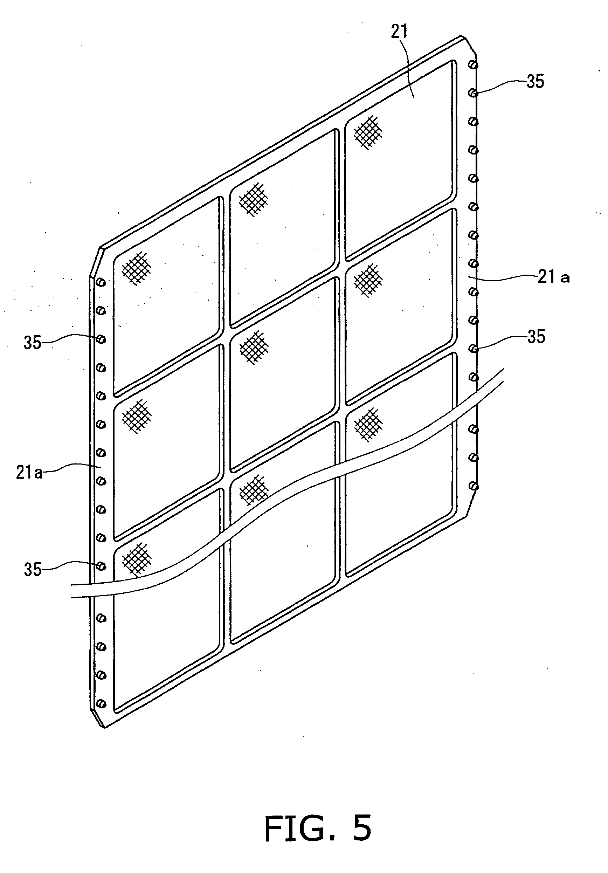

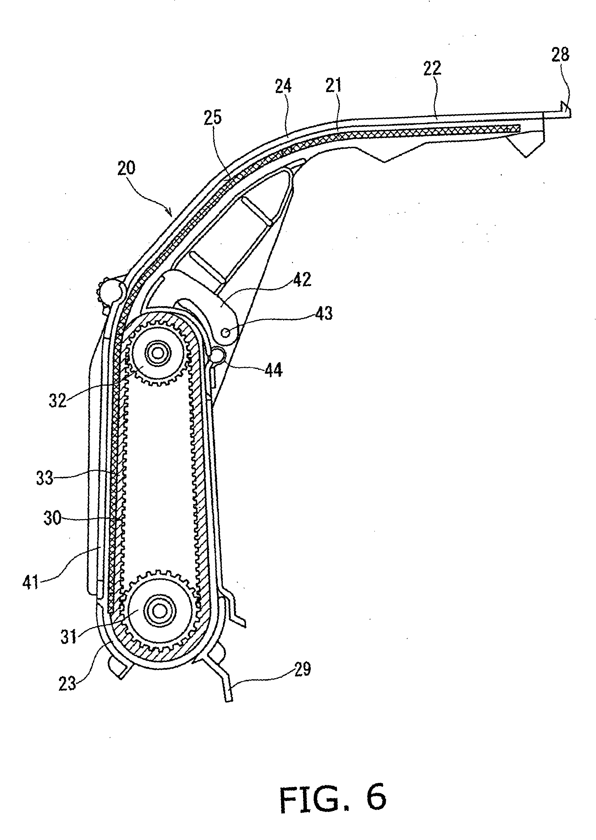

As shown in Figure 5, the filter 21 is band-like. On the back side of the filter 21, projections 35 that fit into the fitting holes 34 are provided at the same pitch as the fitting holes 34 so as to project on each frame body 21a on both lateral portions of the filter 21. The filter 21 is attached to the annular belt 33 by fitting the projections 35 into the fitting holes 34. In this case, as shown in Figures 2 and 6, the filter 21 is attached such that the lower end of the filter 21 is located in the vicinity of the lower pulley 31 as an initial position (normal use position).

In this state, the upper side of the filter 21 is guided and supported at the both sides thereof by the guide portion 25 of the guide frame 24 of the frame unit 22. In addition, the lower side of the filter 21 is guided and supported at the front side thereof by the back side of the door portion 41. As in the conventional air conditioner, the filter 21 is configured so as to cover substantially the entire windward side of the indoor heat exchanger 12.

The roll-up mechanism 30 includes the above described pair of pulleys 31 and 32 and the annular belt 33, and the driving means includes the motor 26. It should be noted here that the roll-up mechanism 30 is configured such that the length of the roll-up unit formed in the roll-up mechanism 30, i.e., the peripheral length of the annular belt 33, is somewhat longer than the entire length of the filter 21. The reason for this is to roll up the filter 21 without forming an overlapping portion when rolling up the entire length of the filter 21 around the annular belt 33.

In addition, a guide member 42 is disposed above the upper pulley 32. The guide member 42 is pivotally supported so as to be able to pivot about a spindle 43, and the leading end of the guide member 42 is biased downward by an elastic member 44 arranged in the vicinity of the spindle 43. In other words, in the normal state, the leading end of the guide member 42 is in slide contact with the surface of the annular belt 33 located above the upper pulley 32.

Note that the above described arrangement of the motors 26 and 27 and the configuration, arrangement, and the like of the components such as the filter 21 and the roll-up mechanism 30 are the same for the both left and right frame units 22. However, the configuration of the power transmission path of each of the motors 26 and 27, which is described later, is different between the left and right frame units 22.

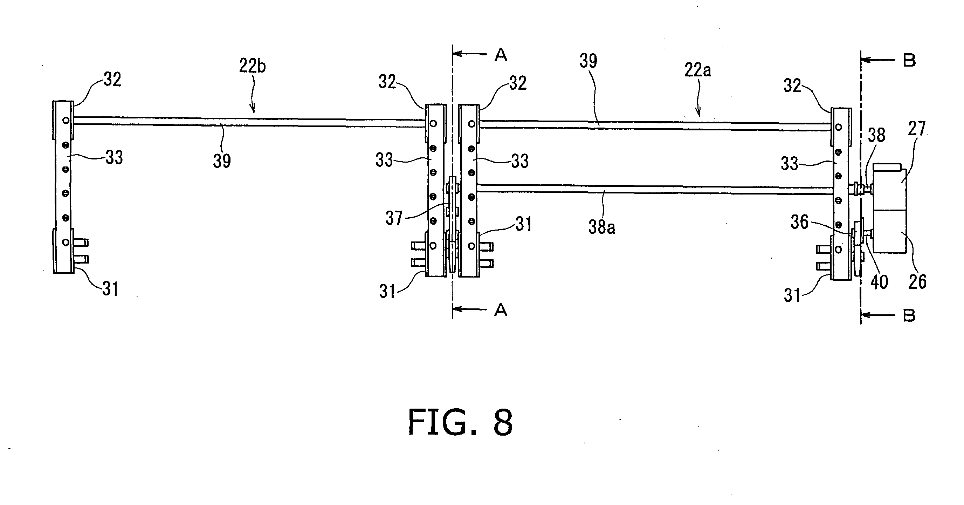

In the above described right frame unit 22a, the lower pulley 31 is rotationally driven by the lower motor 26 shown in Figures 2 and 3. Next, the power transmission path in the right frame unit 22a and a power transmission path for driving the left filter 21 in the left frame unit 22b are described. The schematic configurations thereof are shown in Figures 8 to 10.

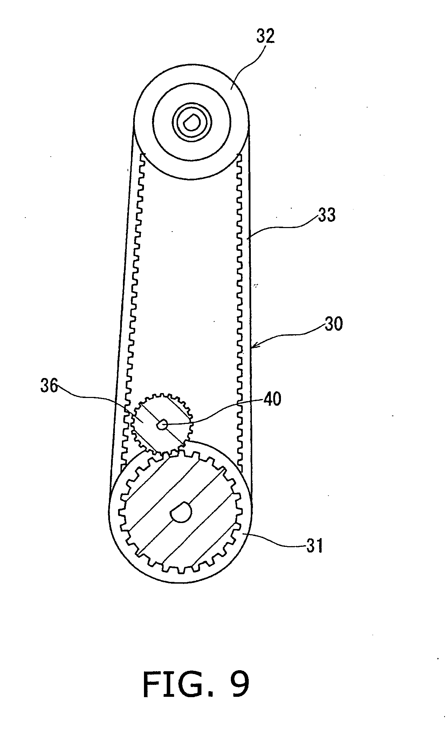

As shown in Figures 8 and 9, an output shaft 40 of the lower motor 26 rotationally drives the lower pulley 31 of the right frame unit 22a via a gear group 36 formed by two gears on the right frame unit 22a. As shown in Figure 8, a transmission shaft 38a connected to an output shaft 38 of the upper motor 27 extends leftward through the right frame unit 22a, and the leading end of the transmission shaft 38a projects from the left side of the right frame unit 22a.

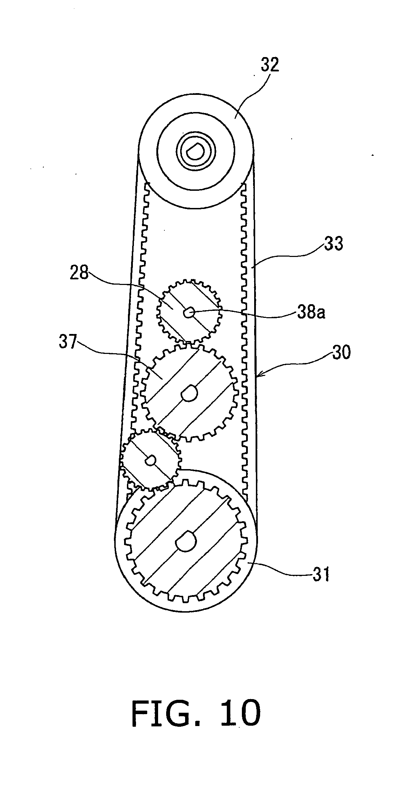

Further, as shown in Figure 10, the transmission shaft 38a rotationally drives the lower pulley 31 of the left frame unit 22b via a gear group 37 formed by four gears. In addition, as shown in Figure 8, the upper pulley 32 of the frame unit 22a and the upper pulley 32 of the frame unit 22b are connected in an interlocking manner by an interlocking shaft 39. When one of the lower pulleys 31 is rotationally driven, all the pulleys 31 and 32 are synchronized together and rotate via the annular belt 33 and the interlocking shaft 39.

As described above, the filter unit 20 is constructed by: connecting the left and right pair of the frame units 22a and 22b each having the built-in filter 21 and the roll-up mechanism (transfer means) 30; mounting the motors 26 and 27 as the driving means to the right frame unit 22a; and making each roll-up mechanism 30 capable of being driven via the interlocking mechanism (the output shaft 40 of the lower motor 26, gear group 36, and interlocking shaft 39, and the output shaft 38 of the upper motor 27, transmission shaft 38a, gear group 37, and interlocking shaft 39).

Further, as shown in Figure 2, the filter unit 20 is attached to the bottom frame 11. A locking claw pin 28 provided to the leading end of each frame unit 22 is locked to an upper end portion of the bottom frame 11, and an attachment pin 29 provided so as to project from the lower portion of each frame unit 22 is screw-fixed in the vicinity of the discharge port 15 of the bottom frame 11.

The front grille 50 is attached to the filter unit 20. Further, the dust box 70 is attached to a position that is below the front grille 50 and above the discharge port 15. The dust box 70 is described. The dust box 70 has a function to remove dust adhering to the filter 21, and the dust box 70 constitutes cleaning means.

As shown in Figure 2, at a lower portion of the filter unit 20, a position below the frame unit 22 (i.e., a position corresponding to the lower pulley 31) is opened, and the surface of the filter 21 moving to this position is subjected to cleaning. A rotary brush 71 is disposed to the dust box 70 for the cleaning. From the underside of the filter unit 20, the rotary brush 71 pressingly contacts the filter 21 moving to this position. During cleaning, the rotary brush 71 is rotationally driven by driving means such a motor or the like (not shown).

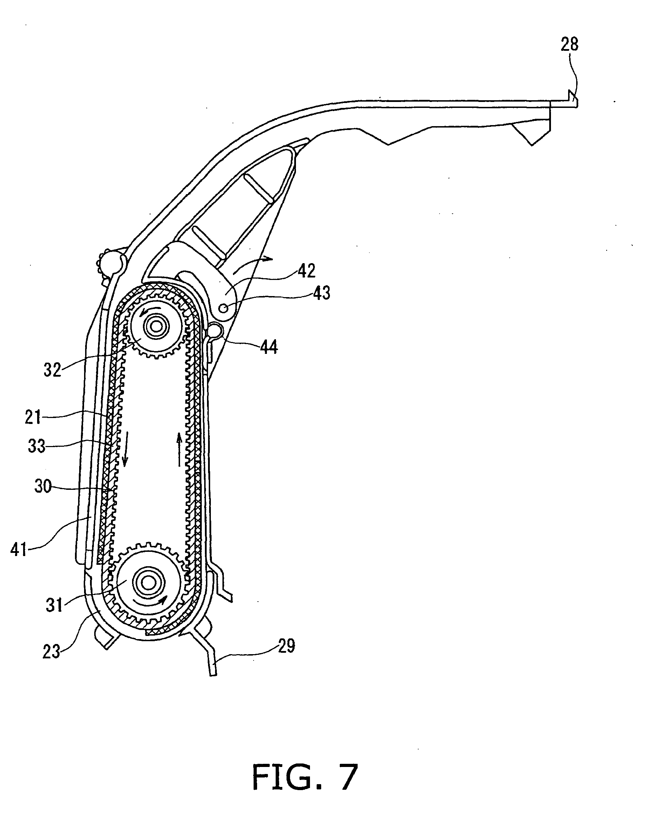

In the above described air conditioner, the filter 21 is brought to a normal position shown in Figures 2 and 6 when an air conditioning operation is performed. Then, at the end of each operation or at the end of an operation after a certain operation period, removing work for removing dust adhering to the filter 21 is performed. Below, the procedure for the removing work is described with reference to Figures 6 and 7. Note that, the lower portion of the filter 21 in the state shown in Figure 6 (state during normal operation) is referred to as a rolling start portion, and an upper leading portion of the filter 21 is referred to as a rolling end portion, for the convenience's sake of description.

First, starting from the state shown in Figure 6, each of the motors 26 and 27 is driven to move the annular belt 33, and the rotary brush 71 of the dust box 70 is rotationally driven at the same time. Consequently, along with the annular belt 33, the filter 21 comes down, and the rolling start portion moves up on the back side (rear in the direction of air distribution) around the lower pulley 31. At this time, the rotary brush 71 rotates in the direction opposite to the lower pulley 31, and wipes dust from the surface of the filter 21.

Also at this time, in the mid portion of the filter 21, the projections 35 are sequentially fit into the fitting holes 34 of the annular belt 33. Then, the rolling end portion is rolled up on the annular belt 33 before the rolling start portion reaches the position of the guide member 42. When the rolling start portion reaches the position of the guide member 42, the rolling start portion pushes up the guide member 42 in resistance against the pressing force of the elastic member 44, moves beneath the guide member 42, and then comes down with the annular belt 33. In this state, the guide member 42 is pressingly in contact with the surface of the filter 21.

As shown in Figure 7, when the rolling end portion comes into contact with the rotary brush 71 and cleaning of this portion is completed, the movement of the annular belt 33 and the rotational driving of the rotary brush 71 are stopped, and the cleaning work in the outward direction is finished.

Next, the cleaning work in the return direction is performed. At this time, the movement direction of the annular belt 33 and the rotation direction of the rotary brush 71 are reversed from those in the case of the above described outward direction. In this case, as the annular belt 33 moves, the rolling start portion moves through the position of the guide member 42, and a state is reached where the guide member pressingly contacts the surface of the annular belt 33 by the elastic force of the elastic member 44.

Then, the rolling end portion becomes separated from the annular belt 33. This is because although the annular belt 33 is curved toward the back side by the upper pulley 32, the filter 21 attempts to maintain an upright position because of its rigidity, which thus gradually increases the space between the annular belt 33 and the filter 21, resulting in separation of the projections 35 of the filter 21 from the fitting holes 34.

At this time, even if the rolling end portion is not completely separated from the annular belt 33 and attempts to follow the curve of the annular belt 33, because the guide member 42 is pressingly in contact with the surface of the annular belt 33, force to remove the rolling end portion from the annular belt 33 is exerted from the guide member 42 on the rolling end portion, and thereby the rolling end portion is reliably separated from the annular belt 33. Then, when the filter 21 returns to the normal use position shown in Figure 6, the cleaning work in the return direction is completed.

According to the air conditioner in the above embodiment, the two motors 26 and 27 are attached to the right frame unit 22a, and the transmission shaft (transmission means) 38a is provided which transmits the power of the upper motor 27 to the left frame unit 22b internally through the right frame unit 22a. Thus, the two motors 26 and 27 can be arranged in the same space, and consequently the air conditioner can be constructed in a small size.

In addition, the roll-up mechanism 30 is provided to each filter 21, so that reliable cleaning operation can be performed. In addition, the two motors 26 and 27 are disposed at a position closest to the electrical component box 14, so that the wire harness work can be simplified. In addition, when an integrated connecter is used in this case, workability of assembly, maintenance, and the like is improved. Further, because the structure having the juxtaposed frame units 22 can be handled as the integrated filter unit 20, workability of assembly, maintenance, and the like is improved.

While an embodiment of the present invention has been described, the scope of the invention is not limited to the above-described embodiment, and various changes and modifications can be made herein without departing from the scope of the invention. For example, although the above described embodiment exemplary describes the two frame units 22 being juxtaposed, the number of frame units 22 is not limited to two, and there may be more than two frame units 22. In addition, although the roll-up mechanism 30 including the pair of the pulleys 31 and 32 and the annular belt 33 is used as the transfer means, conventional methods such as a roll-up method and a loop method can also be used. Further, although a type of air conditioner that performs cooling, heating, and humidity conditioning is described, a type of air conditioner capable of cleaning air is also within the scope of the invention.

## Claims

1. An air conditioner in which sucked indoor air is passed through a filter (21), conditioned, and then returned to a room, the air conditioner comprising:
a plurality of juxtaposed frame units (22a, 22b) on each of which the filter (21) having a band-like shape and transfer means (30) for transferring the filter (21) are mounted;
driving means (26, 27) disposed to any particular frame unit (22a) among the plurality of frame units for driving the transfer means (30) of each frame unit (22a, 22b) ; and
transmission means (38a) provided for transmitting the power of the driving means (27) to another frame unit (22b).

2. The air conditioner according to claim 1, wherein
the driving means (26, 27) is attached to a lateral portion of the frame unit (22a) arranged closest to an electrical component box (14), the lateral portion being closest to the electrical component box (14).

3. The air conditioner according to claim 1 or claim 2, wherein
a filter unit (10) is constructed by connecting the plurality of frame units (22a, 22b), and the filter unit (10) is attached to a bottom frame (11) of a main body of the air conditioner.
